Europäisches Patentamt

(19) European Patent Office   (11) Numéro de publication: **0 240 395**

Office européen des brevets   **B1**

(12)   **FASCICULE DE BREVET EUROPEEN**

(45) Date de publication du fascicule du brevet: **30.01.91**   (51) Int. Cl.⁵: **H 04 N 9/69**

(21) Numéro de dépôt: **87400517.6**

(22) Date de dépôt: **10.03.87**

(54) Procédé et dispositif de correction gamma pour tube cathodique multichrome.

(30) Priorité: **04.04.86 FR 8604836**

(43) Date de publication de la demande:
**07.10.87 Bulletin 87/41**

(45) Mention de la délivrance du brevet:
**30.01.91 Bulletin 91/05**

(84) Etats contractants désignés:
**BE DE GB**

(56) Documents cités:
**EP-A-0 108 471**
**US-A-3 684 825**

(73) Titulaire: **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur: **Pilot, Alain**
**27, rue Renoir**
**F-78960 Voisins le Bretonneux (FR)**

(74) Mandataire: **Marquer, Francis et al**
**CABINET MOUTARD 35, avenue Victor Hugo**
**Résidence Champfleury**
**F-78180 Voisins-le-Bretonneux (FR)**

Courier Press, Leamington Spa, England.

**Description**

La présente invention concerne un procédé et un dispositif de correction gamma pour tube cathodique multichrome.

Elle a plus particulièrement pour but d'assurer la conservation de la chromaticité des couleurs visualisées à l'écran, dans toute la dynamique de réglage du contraste du tube.

D'une manière générale on sait que dans un tube cathodique trichrome classique, les points d'image en couleur se composent chacun de trois éléments luminophores primaires juxtaposés, de couleur rouge, verte et bleue. Ces éléments luminophores sont excités par les flux d'électrons de trois canons à électrons respectivement affectés à ces trois couleurs primaires.

Telle que perçue par un observateur, la couleur de ce point d'image consiste alors en la synthèse additive de ces trois couleurs primaires et dépend des proportions relatives des luminances $L_R$, $L_V$, $L_B$, de ces éléments.

Or les luminances engendrées par les trois canons ont pour expression:

$$L_R = K_R \, (M_R)^{\gamma_R} \quad \text{(canon rouge)}$$

$$L_V = K_V \, (M_V)^{\gamma_V} \quad \text{(canon vert)}$$

$$L_B = K_B \, (M_B)^{\gamma_B} \quad \text{(canon bleu)}$$

expressions dans lesquelles, pour une couleur R, V, B portée en indice:
— le terme M représente la modulation de cathode;
— le terme $\gamma$ représente l'exposant gamma (compris entre 2 et 3);
— le terme K est une constante.

Il s'avère donc que la fonction de transfert $L = f(M)$ est différente pour chaque canon.

Par ailleurs la commande de contraste agit simultanément sur la modulation des trois voies vidéo, de sorte que lorsque cette commande varie, les proportions relatives des luminances sont modifiées à cause des différences entre les fonctions de transfert des canons. On observe donc une variation de la chromaticité en fonction du réglage de contraste.

Cet inconvénient est particulièrement important dans de nombreuses applications qui exigent d'importantes variations de contraste et dans lesquelles les couleurs font partie d'une symbologie et ont des significations bien précises. Tel est notamment le cas en aéronautique.

En vue de supprimer ces inconvénients on a déjà proposé d'introduire une correction (correction gamma) de type

$$\frac{1}{\gamma_i}$$

dans chaque voie vidéo afin de linéariser les courbes de transfert $L = f(M)$ de chacun des canons.

Toutefois cette méthode comporte les limitations suivantes:
— les circuits de correction, placés directement dans les voies vidéo doivant présenter une grande bande passante;
— la forte amplitude de correction

$$\frac{1}{(M\gamma)}$$

nécessite le recours à des techniques onéreuses pour atteindre la précision et la stabilité requises;
— la luminance émise par le tube est proportionnelle à la commande de contraste; le preception de l'oeil étant logarithmique, il en résulte une perte de sensibilité pour les bas niveaux; il faut donc compenser les signaux vidéo et le signal de commande de contraste en conséquence;
— dans un montage comprenant une caméra reliée au tube, le fait de linéariser la réponse du tube altère la restitution des niveaux de gris en provenance de la caméra dont la fonction de transfert (gamma d'analyse) est sensiblement inverse à celle du tube non corrigé.

L'invention a donc pour but de supprimer ces inconvénients. Elle propose un procédé de correction gamma pour tube multichrome qui consiste plus particulièrement:
— à pendre comme référence la fonction de transfert $L_{ref} = K_{ref} (M_{ref})^{\gamma_{ref}}$ relative à l'un des canons du tube, et,
— à appliquer sur les autres canons une correction différentielle faisant passer la modulation Mi de ces canons à une valeur $M_i$

# EP 0 240 395 B1

$$\frac{Y_{ref}}{Y_i}$$

dans laquelle $Y_i$ est l'exposant gamma du canon considéré de manière à rendre les fonctions de transfert de ces canons proportionnelles à celle du canon pris en référence et à faire en sorte qu'en conséquence le rapport des luminances reste constant quel que soit le niveau de commande du contraste.

Grâce à ce procédé, la correction à apporter présente une amplitude beaucoup plus faible que la correction de type

$$\frac{1}{Y_i} \quad \text{habituellement adoptée}$$

Cette correction peut alors être avantageusement effectuée en modélisant la courbe de correction par des segments de droite qui correspondent chacun à une plage de variation du signal de modulation, et en amplifiant ce signal avec un gain fonction de la pente du segment de droite correspondant de la courbe modélisée, la technique utilisée à cet effet étant celle d'un dispositif à commutation de pentes.

Il s'avère que cette solution est d'autant plus efficace que l'amplitude de la correction est faible (un nombre réduit de pentes assurant une excellente précision de correction). Elle présente en outre l'avantage d'être très stable en température.

Un autre avantage du procédé précédemment décrit consiste en ce que la correction à apporter à la modulation $M_i$ peut s'appliquer soit directement dans la chaîne vidéo, soit à la commande de contraste.

Bien entendu l'invention concerne également les dispositifs de correction gamma mettant en oeuvre le procédé précédemment défini.

D'autres particularités et avantages de l'invention apparaîtront à propos des modes d'exécution décrits ci-après, donnés à titre d'exemples non limitatifs avec référence aux dessins annexés dans lesquels:

La figure 1 représente schématiquement le circuit vidéo équipant d'une façon classique un tube cathodique trichrome;

La figure 2 est un schéma similaire à celui de la figure 1, dans lequel figurent les circuits de correction gamma habituellement utilisés;

La figure 3 illustre dans un circuit similaire à celui des figures 1 et 2 le principe du procédé selon l'invention, dans le cas où la correction est effectuée directement sur le signal vidéo;

La figure 4 représente schématiquement un autre mode d'exécution de l'invention dans lequel la correction est effectuée sur la commande de contraste;

La figure 5 est un diagramme illustrant l'amplitude de la correction apportée conformément au procédé selon l'invention et celle relative à une correction gamma classique;

La figure 6 représente schématiquement un circuit de correction à commutation de pentes;

La figure 7 est un diagramme montrant un mode de modélisation de la courbe de correction par des segments de droite.

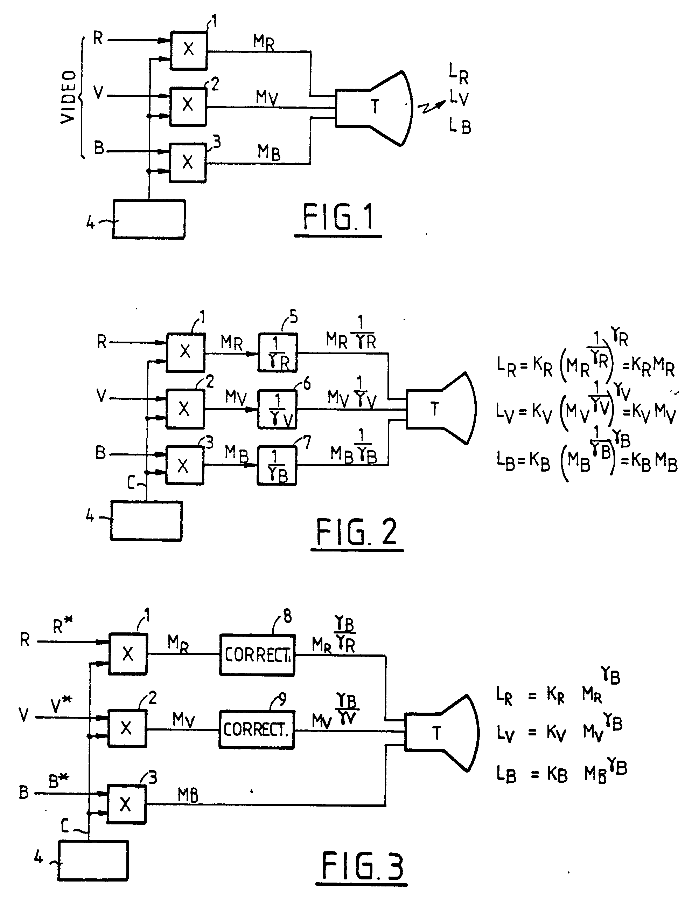

Le circuit représenté sur la figure 1 fait intervenir de façon classique trois lignes vidéo R, V, B affectuées aux trois couleurs primaires, à savoir le rouge pour la ligne R, le vert pour la ligne V et le bleu pour la ligne B. Ces trois lignes R, V, B sont respectivement connectées aux trois canons à électrons d'un tube électronique trichrome T, par l'intermédiaire de trois circuits 1, 2, 3 aptes à effectuer une variation de contraste en réponse à un même signal de commande c émanant d'un dispositif de réglage de contraste 4.

Ces circuits 1, 2, 3 délivrent donc des signaux électriques de modulation $M_R$, $M_V$, $M_B$ qui sont respectivement transformés par le tube T en des signaux lumineux de luminance $L_R$, $L_V$ et $L_B$ ayant pour expression:

$$L_R = K_R \ (M_R)^{Y_R}$$

$$L_V = K_V \ (M_V)^{Y_V}$$

$$L_B = K_B \ (M_B)^{Y_B}$$

La solution classique pour effectuer une correction gamma consiste à utiliser dans chacune des lignes vidéo un circuit de correction 5, 6, 7 élevant les signaux de modulation $M_R$, $M_V$ et $M_M$ respectivement aux puissances

$$\frac{1}{Y_R}, \ \frac{1}{Y_V} \ \text{et} \ \frac{1}{Y_B}$$

(figure 2).

3

Les expressions des luminances $L_R$, $L_V$ et $L_B$ deviennent alors:

$$L_R = K_R \left( M_R^{\frac{1}{\gamma_R}} \right)^{\gamma_R} = K_R \, M_R$$

$$L_V = K_V \left( M_V^{\frac{1}{\gamma_V}} \right)^{\gamma_V} = K_V \, M_V$$

$$L_B = K_B \left( M_B^{\frac{1}{\gamma_B}} \right)^{\gamma_B} = K_B \, M_B$$

On obtient bien une linéarisation des courbes de transfert.

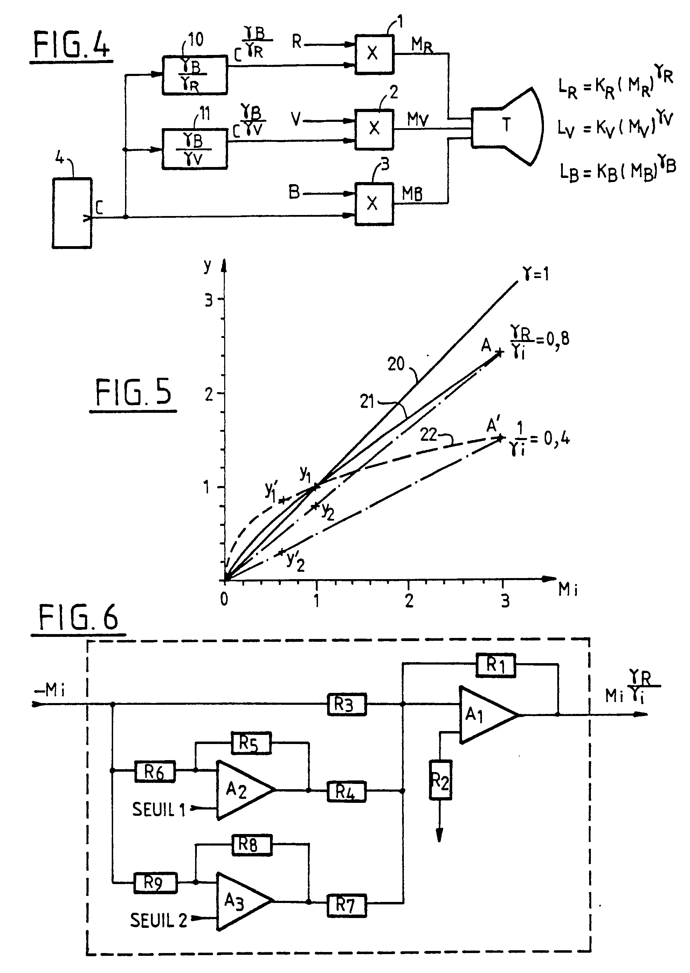

Les inconvénients de cette solution qui ont été précédemment exposés sont supprimés grâce au procédé de correction selon l'invention dont le principe est illustré par les circuits représentés figures 3 et 4.

Dans le circuit représenté sur la figure 3, la correction s'effectue sur deux des trois lignes de la chaîne vidéo, à savoir les lignes R et V.

Elle consiste à prendre comme référence la fonction de transfert de l'un des canons, ici le canon bleu, et de corriger la modulation $M_R$ et $M_V$ des autres canons au moyen de circuits de correction 8, 9, élevant la modulation $M_R$ à la puissance

$$\frac{\gamma_B}{\gamma_W}$$

et la modulation $M_V$ à la puissance

$$\frac{\gamma_B}{\gamma_V}$$

Les luminances obtenues sur l'écran sont alors de la forme:

$$L_R = K_R \left( M_R^{\frac{\gamma_B}{\gamma_R}} \right)^{\gamma_R} = K_R \, M_R^{\gamma_B}$$

$$L_V = K_V \left( M_V^{\frac{\gamma_B}{\gamma_V}} \right)^{\gamma_V} = K_V \, M_V^{\gamma_B}$$

$$L_B = K_B \left( M_B^{\gamma_B} \right)$$

Autrement dit les fonctions de transfert des lignes R et V sont ramenées à celle de la ligne B.

En conséquence les rapports de luminance sont conservés quel que soit le niveau de la commande de contraste. En effet, les relations entre la modulation et la commande de contraste c peuvent être exprimées de la façon suivante:

$$M_R = C \times R^*$$
$$M_V = C \times V^*$$
$$M_B = C \times B^*$$

4

expressions dans lesquelles les termes R*, V* et B* représentent respectivement les informations relatives aux couleurs rouge, verte et bleue des lignes R, V, B en amont des circuits 1, 2 et 3.

Les expressions des luminances deviennent alors:

$$L_B = K_B \ (C \ x \ B^*)^{\gamma_B},$$

$$L_R = K_R \ (C \ x \ R^*)^{\gamma_B}, \ et$$

$$L_V = K_V \ (C \ x \ V^*)^{\gamma_B}.$$

Le rapport des luminances $L_B$ et $L_R$ et alors:

$$\frac{L_B}{L_R} = \frac{K_B}{K_R} \ . \ \frac{(C \ x \ B^*)^{\gamma_B}}{(C \ x \ R^*)^{\gamma_B}}$$

Il est clair que ce rapport demeure constant quelle que soit la valeur de la tension de commande c.

Il apparaît par ailleurs que, contrairement aux dispositifs de correction γ classiques, une variation linéaire de la commande de contraste c est perçue par l'oeil de façon linéaire. En effet, la perception logarithmique de l'oeil est compensée par la réponse exponentielle du tube.

En outre, il convient de noter que le signal délivré par une caméra vidéo monochrome est de la forme:

$$V = K_a L_a^{\gamma_a}$$

expression dans laquelle:
V est la tension délivrée,
$L_a$ est la luminance reçue par la caméra,
$\gamma_a$ est le gamma d'analyse ($\simeq 0,4$),
$K_a$ est une constante.

Le raccordement de cette caméra à un tube cathodique par l'intermédiaire d'un circuit de traitement vidéo comprenant un circuit de correction selon l'invention conduit à obtenir une luminance restituée $L_{RES}$ de la forme:

$$L_{RES} = K_{RES} \ K_a L_a^{\gamma_a \ \gamma_{RES}}$$

$$\gamma_{RES} \ est \ le \ gamma \ du \ tube$$

$$K_{RES} \ est \ une \ constante.$$

Or la luminance $L_{Res}$ restituée par le tube doit être proportionnelle à la luminance $L_a$ analysée par la caméra (restitution correcte des niveaux de gris). Cette condition est remplie pour

$$\gamma_{RES} = \frac{1}{\gamma_a} \ .$$

Dans la pratique, le gamma d'analyse $\gamma_a$ est l'inverse du gamma d'un tube cathodique; la condition est donc automatiquement remplie et peut être appliquée en prenant comme gamma de référence pour le tube l'inverse du gamma d'analyse spécifié.

Cette condition n'est pas réalisée dans le cas d'une correction classique de type

$$\frac{1}{\gamma_i}$$

visant à linéariser les fonctions de transfert du tube. Il est alors nécessaire de pré-corriger transfert du tube. Il est alors nécessaire de pré-corriger séparément le signal provenant de la caméra, ce qui constitué un inconvénient relativement important.

5

**EP 0 240 395 B1**

Dans la variante d'exécution représentée sur la figure 4, la correction n'est plus effectuée sur la voie vidéo du tube mais dans le circuit de commande de contraste.

Dans cet exemple cette correction est assurée par deux dispositifs de correction 10, 11 agissant sur le signal de commande de contraste c entre les circuits de variation de contraste 1, 2 et le dispositif de réglage de contraste 4.

Les dispositifs de correction 10 et 11 permettent de transformer le signal de commande c en un signal de la forme c

$$\frac{\gamma_B}{\gamma_R}$$

pour la commande de contraste associée à la ligne vidéo rouge R et en un signal de la forme c

$$\frac{\gamma_B}{\gamma_V}$$

pour la commande de contraste associée à la ligne vidéo verte V.

D'une même façon que précédemment on obtient des signaux de luminance de la forme:

$$L_B = K_B \; (C \; x \; B^*)^{\gamma_B}$$

$$L_R = K_R \; (C \; x \; R^*)^{\gamma_B}, \; et$$

$$L_V = K_V \; (C \; x \; V^*)^{\gamma_B}$$

Cette solution présente un intérêt supplémentaire par rapport à la précédente. Les circuits de correction 10, 11 n'ont pas besoin de présenter une bande passante élevée ($\simeq$ vidéo) puisqu'ils sont placés dans un circuit de commande lent.

Dans ce type d'application, la fonction de transfert diffère suivant que la variable d'entrée est le signal de commande de contraste c ou les signaux vidéo R, V, B.

Ainsi dans le cas où la variable d'entrée est le signal c avec pou paramètres les signaux R, V, B, la fonction de transfert sera de la forme:

$$L_i = K_i \; (M_i)^{\gamma_{REF}}$$

$\gamma_{REF}$ étant le coefficient $\gamma$ du canon de référence.

Par contre, dans le cas où les variables d'entrée sont les signaux vidéo R, V, B avec le signal c pour paramètre, la fonction de transfert sera de la forme:

$$L_i = K_i \; (M_i)^{\gamma_i}$$

$$\gamma_i \text{ étant le coefficient } \gamma \text{ du canon considéré.}$$

Des courbes représentées sur le diagramme de la figure 5 permettent de montrer que l'amplitude $\Delta y$ des corrections effectuées par les dispositifs 8, 9, 10, 11, conformes à la présente invention demeure très inférieure à l'amplitude des corrections classiques de type

$$\frac{1}{\gamma_i}$$

Ces courbes ont été élaborées dans le cadre d'un exemple faisant intervenir:
— un exposant gamma de référence $\gamma_R = 2$
— un exposant gamma de l'un des autres canons $\gamma_i = 2,5$
— une modulation de cathode $M_i$ (qui correspond au "full on" du tube) égale à $M_i = 3$.
Le diagramme comprend plus particulièrement:
— une courbe 20 de la forme y = $M_i$ (avec un gamma égal à 1),

6

— une courbe 21 de la forme $y = M_i$

$$\frac{Y_{ref}}{Y_i}$$

qui, en prenant les valeurs précédemment indiquées devient $y = M_i^{0,8}$,

— une courbe 22 de la forme $y = M_i$

$$\frac{1}{Y_i},$$

soit $y = M_i^{0,4}$.

Dans le cas de la courbe 21, qui correspond à la solution proposée par la présente invention, la correction $\Delta y$ a une amplitude maximale lorsque la dérivée de la fonction $y = M_i^{0,8}$ est égale à la pente de la droite OA, le point A ayant pour coordonnées:

$$\begin{cases} M_i = 3 \\ y = 3^{0,8} = 2,41. \end{cases}$$

la pente de la droite OA est égale à

$$\frac{y}{M_i} = \frac{2,41}{3} = 0,8 \text{ et la dérivée de la fonction s'écrit:}$$

$$\frac{dy}{dM_i} = 0,8 \, M_i^{-0,2}$$

On en déduit la valeur de $M_i$ correspondant à cette amplitude maximale:

$$0,8 \, M_i^{-0,2} = 0,8 = M_i = 1$$

puis les valeurs $y_1$ et $y_2$ correspondant à cette valeur de $M_i$ sur la courbe 21 et sur la droite OA,

$$Y_1 = M_i^{0,8} = 1$$

$$y_2 = 0,8 \, M_i = 0,8$$

L'amplitude maximale de la correction est alors obtenue par la différence:

$$y_1 - Y_2 = \Delta y = 0,2$$

L'amplitude maximale de la correction du type

$$\frac{1}{Y_i}$$

(courbe 22) est déterminée d'une façon analogue, avec:

les coordonnées du point A' égales à

$$M_i = 3 \text{ et } y' = 3^{0,4} = 1,55$$

— la pente du segment OA' égale à

$$\frac{y'}{M_i} = 0,52$$

— la dérivée

$$\frac{dy'}{dM_i} = 0,4 \, M_i^{-0,6} = 0,52$$

— la valeur de $M_i$ correspondant à l'amplitude maximale

$$M_i = 0,65$$

les valeurs $y'_1$ et $y'_2$:

$$y'_1 = 0,65^{0,4} = 0,84$$

$$y'_2 = 0,65 \times 0,52 = 0,34$$

On obtient donc une amplitude maximale de correction $y'_1 - Y'_2 = 0,5$. Il est clair que cette amplitude maximale est beaucoup plus importante que celle obtenue précédemment, à savoir $y_1 - y_2 = 0,2$.

Cette particularité permet d'utiliser pour la correction un dispositif à commutation de pente tel que celui représenté sur la figure 6 et qui comprend:
— un montage amplificateur sommateur comprenant de façon classique un amplificateur opérationnel $A_1$ et des résistances $R_1$, $R_2$, l'entrée de cet amplificateur recevant le signal —$M_i$ par l'intermédiaire:
— d'une résistance $R_3$,
— d'un premier dispositif à seuil (de seuil $S_1$) comprenant l'amplificateur opérationnel $A_2$ et les résistances $R_4$, $R_5$, $R_6$, et
— d'un deuxième dispositif à seuil (de seuil $S_2$ supérieur à $S_1$) comprenant l'amplificateur opérationnel $A_3$ et les résistances $R_7$, $R_8$, $R_9$.

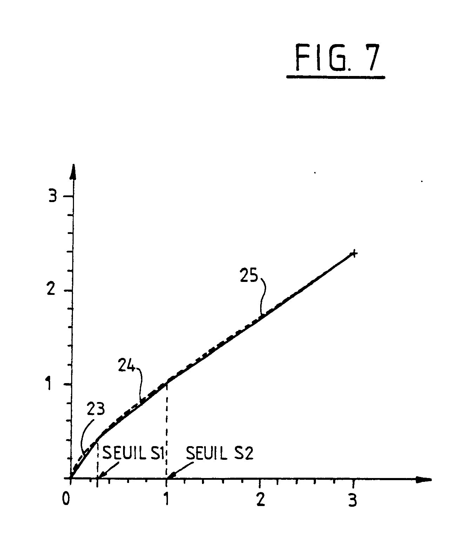

Ce dispositif de correction permet donc de modéliser la courbe de correction en trois segments de droite comme représenté figure 7, à savoir:
— un premier segment de droite 23 compris entre le point 0 et la valeur de $M_i$ correspondant au seuil $S_1$ du premier dispositif à seuil, la pente de ce segment correspondant au gain du montage amplificateur $A_1$, $R_1$, $R_2$, $R_3$;
— un second segment de droite 24 compris entre les valeurs de $M_i$ correspondant aux seuils $S_1$ et $S_2$ des deux dispositifs à seuil, la pente de ce second segment correspondant à la somme des gains du montage amplificateur $A_1$, $R_1$, $R_2$, $R_3$ et du premier dispositif à seuil; et
— un troisième segment de droite 25 compris entre la valeur de $M_i$ correspondant aux seuil $S_2$ et la valeur de $M_i$ correspondant au point A tel que précédemment défini, la pente de ce troisième segment correspondant à la somme des gains du montage amplificateur et des deux dispositifs à seuil.

Le principe de ce dispositif de correction est donc particulièrement simple. Grâce au fait que la courbe de correction peut être modélisée par un nombre très réduit de segments on obtient cependant une excellente précision de la correction. Ce dispositif présente en outre l'avantage d'être très stable en température.

**Revendications**

1. Procédé de correction gamma pour tube cathodique multichrome équipé d'un circuit de commande de contraste agissant simultanément sur les signaux de modulation de cathode des canons à électrons du tube, caractérisé en ce qu'il consiste:
— à prendre comme référence la fonction de transfert $L_{ref} = K_{ref} (M_{ref})^{\gamma ref}$ relative à l'un des canons du tube, $L_{ref}$ étant la luminance engendrée par le canon de référence, $M_{ref}$ étant la modulation appliquée à la cathode du canon de référence et le terme $\gamma_{ref}$ représentant l'exposant gamma du canon du canon de référence, et
— à appliquer sur les autres canons une correction différentielle faisant passer la modulation de cathode $M_i$ de ces autres canons à une valeur $M_i$

$$\frac{\gamma_{ref}}{\gamma_i}$$

dans laquelle l'exposant $\gamma_i$ est l'exposant gamma du canon considéré de manière à rendre les fonctions de transfert desdits autres canons proportionnelles à celle du canon pris en référence, et qu'en conséquence le rapport des luminances reste constant quel que soit le niveau de commande de contraste du tube.

2. Procédé selon la revendication 1, caractérisé en ce que la susdite correction est effectuée en utilisant une modélisation de la courbe de correction $y = M_i$

$$\frac{\gamma_{ref}}{\gamma_i}$$

par des segments de droite.

3. Procédé selon l'une des revendications précédentes, caractérisé en ce que la susdite correction est directement appliquée dans la chaîne vidéo, sur les signaux de modulation de cathode des canons à électrons.

4. Procédé selon l'une des revendications 1 et 2, caractérisé en ce que la susdite correction est appliquée à la commande de contraste.

5. Procédé selon l'une des revendications précédentes, caractérisé en ce que la susdite correction comprend pour chacun des canons à électrons considérés:

— la détermination de la courbe de correction à apporter au signal de modulation de cathode de ce canon,

— la modélisation de cette courbe de correction par des segments de droite qui correspondent chacun à une plage de variation du signal de modulation,

— l'amplification du signal de modulation dans chacune desdites plages avec un gain fonction de la pente du segment de droite correspondant de la courbe modélisée.

6. Dispositif pour la mise en oeuvre du procédé selon l'une des revendications précédentes dans le cas d'un tube électronique multichrome à n canons à électrons, caractérisé en ce que pour chacun des $n-1$ canons à électrons du tube, il comprend un circuit de correction (8, 9) apte à élever la modulation de cathode de ce canon à une puissance

$$\frac{\gamma_{ref}}{\gamma_i}$$

dans laquelle le terme $\gamma_{ref}$ est l'exposant gamma du $n^{ième}$ canon qui est pris en référence et le terme $\gamma_i$ est l'exposant gamma du canon considéré.

7. Dispositif selon la revendication 6, caractérisé en ce que les susdits circuits de correction (10, 11) sont disposés dans les circuits vidéo (R, V) reliant les circuits de variation de contraste (1, 2) aux $n-1$ canons à électrons correspondants.

8. Dispositif selon la revendication 6, caractérisé en ce que les susdits circuits de correction sont disposés dans les circuits reliant le dispositif de réglage de contraste aux circuits de variation de contraste (1, 2) affectés aux susdits $n-1$ canons.

9. Dispositif selon l'une des revendications précédentes, caractérisé en ce que les susdits circuits de correction (8, 9, 10, 11) consistent en des circuits à commutation de pente.

10. Dispositif selon l'une des revendications précédentes, caractérisé en ce que les susdits circuits de correction comprennent chacun un circuit amplificateur sommateur ($A_1$, $R_1$, $R_2$) recevant le signal à corriger directement et par l'intermédiaire d'au moins un dispositif à seuil ($A_2$, $R_4$, $R_5$, $R_6$.

## Patentansprüche

1. Verfahren zur Gammakorrektur einer mehrfarbigen mit einem Kontraststeuerkreis ausgerüsteten Kathodenstrahylröhre, das gleichzeitig auf die Kathodenmodulationssignale der Elektronenkanonen der Röhre wirkt, dadurch gekennzeichnet, dass es darin besteht:

— die sich auf eine der Kanonen der Röhre beziehende Übertragungsfunktion $L_{ref} = K_{ref} (M_{ref})^{\gamma ref}$ als Referenz zu benutzen, wobei $L_{ref}$ die von der Referenzkanone erzeugte Leuchtdichte ist, $M_{ref}$ die auf die Kathode der Referenzkanone angewandte Modulation und der Ausdruck $\gamma_{ref}$ den Gammaexponenten der Referenzkanone darstellt, und

— auf die anderen Kanonen eine Differentialkorrektur anzuwenden, welche die Kathodenmodulation $M_i$ dieser anderen Kanonen auf den Wert $M_i$

$$\frac{\gamma_{ref}}{\gamma_i}$$

bringt, in dem der Exponent $\gamma_i$ der Gammaexponent der betreffenden Kanone ist, damit die Übertragungsfunktionen der anderen Kanonen proportional zu der als Referenz gewählten Kanone sind und infolgedessen das Leuchtdichteverhältnis konstant bleibt, unabhängig vom Kontraststeuerniveau der Röhre.

2. Verfahren nach Anspruch 1, dadurch gekennzeichnet, dass besagte Korrektur ausgeführt wird, indem man ein mathematisches Modell der Korrekturkurve $y = M_i$

$$\frac{\gamma_{ref}}{\gamma_i}$$

mit Geradenabschnitten benutzt.

3. Verfahren nach einem der vorhergehenden Ansprüche, dadurch gekennzeichnet, dass besagte Korrektur direkt im Videokanal auf die Kathodenmodulationssignale der Elektronenkanone angewandt wird.

4. Verfahren nach einem der Ansprüche 1 und 2, dadurch gekennzeichnet, dass besagte Korrektur auf die Kontraststeuerung angewandt wird.

5. Verfahren nach einem der vorhergehenden Ansprüche, dadurch gekennzeichnet, dass besagte Korrektur für jede der betreffenden Elektronenkanonen besteht in:

— der Bestimmung der auf das Kathodenmodulationssignal dieser Kanone anzuwendenden Korrekturkurve,

— der Ausarbeitung eines mathematischen Modells dieser Korrekturkurve mit Geradenabschnitten, die jeweils einem Variationsbereich des Modulationssignals entsprechen,

— der Verstärkung des Modulationssignals in jedem dieser Bereiche, mit einem von der Steigung des entsprechenden Geradenabschnittes der Modellkurve abhängigen Verstärkungsfaktor.

6. Vorrichtung zur Anwendung des Verfahrens nach einem der vorhergehenden Ansprüche auf eine mehrfarbige elektronische Strahlröhre mit n Elektronenkanonen, dadurch gekennzeichnet, dass sie für jede der n−1 Elektronenkanonen der Röhre einen Korrekturkreis (8, 9) aufweist, der die Kathodenmodulation dieser Kanone auf eine Stärke

$$\frac{\gamma_{ref}}{\gamma_i}$$

bringt, wobei der Ausdruck $\gamma_{ref}$ der Gammaexponent der nten Kanone ist, die als Referenz gewählt wurde und der Ausdruck $\gamma_i$ der Gammaexponent der in Betracht gezogenen Kanone.

7. Vorrichtung nach Anspruch 6, dadurch gekennzeichnet, dass die besagten Korrekturkreise (10, 11) in den Videoschaltkreisen (R, V) angeordnet sind, welche die Kontrastvariationsschaltungen (1, 2) mit den entsprechenden n−1 Elektronenkanonen verbinden.

8. Vorrichtung nach Anspruch 6, dadurch gekennzeichnet, dass die besagten Korrekturkreise in den Schaltkreisen angeordnet sind, welche die Kontrasteinstellvorrichtung mit den den besagten n−1 Kanonen zugeordneten Kontrastvariationsvorrichtungen (1, 2) verbinden.

9. Vorrichtung nach einem der vorhergebenden Ansprüche, dadurch gekennzeichnet, dass die besagten Korrekturkreise (8, 9, 10, 11) aus Steigungswechselschaltungen bestehen.

10. Vorrichtung nach einem der vorhergehenden Ansprüche, dadurch gekennzeichnet, dass die besagten Korrekturkreise jeweils einen Verstärker-Summatorkreis ($A_1$, $R_1$, $R_2$) aufweisen, welche das zu korrigierende Signal direkt oder durch mindestens eine Schwellenvorrichtung ($A_2$, $R_4$, $R_5$, $R_6$) erhalten.

**Claims**

1. A gamma correction method for multichrome cathode ray tubes equipped with a contrast control circuit acting simultaneously on the cathode modulation signals of the electron guns of the tube, characterized in that it consists in:

— taking as reference the transfer function $L_{ref} = K_{ref} (M_{ref})^{\gamma ref}$ relative to one of the guns of the tube, $L_{ref}$ being the luminance generated by the reference gun, $M_{ref}$ being the modulation applied to the cathode of the reference gun and term $\gamma_{ref}$ representing the gamma exponent of the reference gun, and

— applying to the other guns a differential correction causing the cathode modulation $M_i$ of these other guns to pass to a value

$$M_i \, \frac{\gamma_{ref}}{\gamma_i}$$

in which the exponent $\gamma_i$ is the gamma exponent of the gun considered so as to make the transfer functions of said other guns proportional to that of the gun taken as reference, and so that consequently the ratio of the luminances remains constant whatever the contrast control level of the tube.

2. The method as claimed in claim 1, characterized in that said correction is carried out by creating a mathematical model of the correction curve

$$y = M_i \, \frac{\gamma_{ref}}{\gamma_i}$$

by means of straight line segments.

3. The method as claimed in one of the preceding claims, characterized in that said correction is directly applied in the video channel to the cathode modulation signal of the electron guns.

4. The method as claimed in one of claims 1 and 2, characterized in that said correction is applied to the contrast control.

5. The method as claimed in one of the preceding claims, characterized in that said correction includes for each of the electron guns considered:

— determination of the curve of correction to be made to the cathode modulation signal of this gun,

— the creating of a mathematical model of this correction curve by means of straight line segments which each correspond to a range of variation of the modulation signal,

— amplification of the modulation signal in each of said ranges with a gain depending on the slope of the corresponding straight line segment of the model curve.

6. A device for implementing the method as claimed in one of the preceding claims in the case of a multi-chrome electron tube with n electron guns, characterized in that for each of the n−1 electron guns of the tube, it includes a correction circuit (8, 9) adapted for raising the cathode modulation of this gun to a power

$$\frac{\gamma_{ref}}{\gamma_i}$$

in which the term $\gamma_{ref}$ is the gamma exponent of the nth gun which is taken as reference and the term $\gamma_i$ is the gamma exponent of the gun considered.

7. The device is claimed in claim 6, characterized in that said correction circuits (10, 11) are disposed in the video circuits (R, G) connecting the contrast variation circuits (1, 2) to the n−1 corresponding electron guns.

8. The device as claimed in claim 6, characterized in that said correction circuits are disposed in the circuit connecting the contrast adjustment device to the contrast variation circuits (1, 2) assigned to said n−1 guns.

9. The device as claimed in one of the preceding claims, characterized in that said correction circuits (8, 9, 10, 11) consist of slope switching circuits.

10. The device as claimed in one of the preceding claims, characterized in that said correction circuits each include an amplifier-summator circuit ($A_1$, $R_1$, $R_2$) receiving the signal to be corrected directly and through at least one threshold device ($A_2$, $R_4$, $R_5$, $R_6$).

## FIG.1

$$L_R$$
$$L_V$$
$$L_B$$

## FIG.2

$$L_R = K_R \left( M_R^{\frac{1}{\gamma_R}} \right)^{\gamma_R} = K_R M_R$$

$$L_V = K_V \left( M_V^{\frac{1}{\gamma_V}} \right)^{\gamma_V} = K_V M_V$$

$$L_B = K_B \left( M_B^{\frac{1}{\gamma_B}} \right)^{\gamma_B} = K_B M_B$$

## FIG.3

$$L_R = K_R \ M_R^{\gamma_B}$$

$$L_V = K_V \ M_V^{\gamma_B}$$

$$L_B = K_B \ M_B^{\gamma_B}$$

1

FIG.4

$$L_R = K_R ( M_R )^{\Upsilon_R}$$

$$L_V = K_V ( M_V )^{\Upsilon_V}$$

$$L_B = K_B ( M_B )^{\Upsilon_B}$$

FIG.5

FIG.6

2

# FIG. 7